# EUROPEAN PATENT APPLICATION

(11) **EP 2 383 997 A1**
(43) Date of publication of application: **02.11.2011**
(21) Application number: 09839110.5
(22) Date of filing: 31.07.2009
(51) Int. Cl.: H04N 7/173, G09G 5/00, G09G 5/36

(54) **DYNAMIC IMAGE DISPLAY DEVICE**

(30) Priority: 29.01.2009 JP 2009018516
(71) Applicant: Mitsubishi Electric Corporation, Tokyo 100-8310 (JP)
(72) Inventor: ISU, Kumiko, Tokyo 100-8310 (JP); TSUSHIMA, Naoyuki, Tokyo 100-8310 (JP); ABUKAWA, Masahiro, Tokyo 100-8310 (JP); MURAYAMA, Shu, Tokyo 100-8310 (JP)
(74) Representative: Pfenning, Meinig & Partner GbR
(86) International application number: PCT/JP2009/003649
(87) International publication number: WO 2010/086918

(57) **Abstract**

A moving image display includes a data forming unit 10 for extracting encoded data from received data; a decoding unit 13 for decoding moving image data from the encoded data extracted by the data forming unit 10, and for detecting not only error information at the decoding, but also visual characteristic information indicating a feature of a picture to be displayed; a storage unit 14 for storing the moving image data decoded by the decoding unit 13 as still image data; and a switching control unit 15 for outputting, as display data, the moving image data decoded by the decoding unit 13 or the still image data stored in the storage unit 14 in accordance with the error information and visual characteristic information detected by the decoding unit 13.

## Description

### TECHNICAL FIELD

The present invention relates to a moving image display for switching a picture when errors occur owing to deterioration in radio conditions.

### BACKGROUND ART

A technique is known which carries out switching from a moving image to a still image when errors occur owing to deterioration in radio conditions at receiving a digital broadcast. For example, Patent Document 1 discloses a technique for switching from a moving image to a still image when received encoded data cannot be decoded timely. The technique has a timer, and unless the timer is controlled timely, a selector automatically selects an output of a still image, and outputs a high-definition still image.

Alternatively, Patent Document 2 discloses a technique that detects errors from digital data, compares with a threshold determined in accordance with the genre, image size, type of the digital data of a program corresponding to video data, and that switches to a still image when the number of unit blocks having errors is not less than a threshold.

### Prior Art Document

### Patent Document

Patent Document 1: Japanese Patent Laid-Open No. 2002-152743.
Patent Document 2: Japanese Patent Laid-Open No. 2006-186787.

### DISCLOSURE OF THE INVENTION

The conventional moving image display carries out switching of the image display uniquely according to the comparison of the time taken for decoding or the number of errors with the threshold.
The method, however, does not consider human visual characteristics, and handles a scene with a large movement in the same manner as a scene with a small movement in switching the images. Generally, as for a scene with a large movement, even if the images are distorted somewhat, a viewer will not become conscious of the disturbance because of paying attention to the movement. However, as for a scene with little movement such as a landscape, a problem arises in that the viewer will recognize the distortion of the image in spite of the same degree of movement because the image has no large changes.
In addition, it carries out the switching of image display in the same manner regardless of whether the distortion of the image occurs at a corner of the screen to which the viewer pays little attention or at the center of the screen. This offers a problem in that it causes the viewer who is not aware of the distortion of the image to perceive the distortion of the image.

The present invention is implemented to solve the foregoing problems. Therefore it is an object of the present invention to provide a moving image display capable of holding the viewer' s recognition of the distortion of the image to a minimum by appropriately controlling the switching between a moving image and a still image when errors occur owing to deterioration in radio conditions.

A moving image display in accordance with the present invention includes: a data forming unit for extracting encoded data from received data; a decoding unit for decoding moving image data from the encoded data extracted by the data forming unit, and for detecting not only error information at the decoding, but also visual characteristic information indicating a feature of a picture to be displayed; a storage unit for storing the moving image data decoded by the decoding unit as still image data; and a switching control unit for outputting, as display data, the moving image data decoded by the decoding unit or the still image data stored in the storage unit in accordance with the error information and visual characteristic information detected by the decoding unit.

According to the present invention, since it is configured as described above, it can hold down the viewer's recognition of the distortion of the image to a minimum by appropriately controlling the switching between the moving image and the still image in accordance with the amount of motion of the picture and/or error positions therein when the errors occur owing to deterioration in radio conditions.

### BRIEF DESCRIPTION OF THE DRAWINGS

FIG. 1 is a block diagram showing an outline of a moving image display of an embodiment 1 in accordance with the present invention;
FIG. 2 is a flowchart showing switching control processing of the moving image display of the embodiment 1 in accordance with the present invention;
FIG. 3 is a block diagram showing an outline of a moving image display of an embodiment 2 in accordance with the present invention;
FIG. 4 is a diagram showing an example of a region of interest of the moving image display of the embodiment 2 in accordance with the present invention;
FIG. 5 is a flowchart showing switching control processing of the moving image display of the embodiment 2 in accordance with the present invention;
FIG. 6 is a block diagram showing an outline of a moving image display of an embodiment 3 in accordance with the present invention;
FIG. 7 is a diagram showing an OSD image on the moving image display of the embodiment 3 in accordance with the present invention;
FIG. 8 is a flowchart showing the switching control processing of the moving image display of the embodiment 3 in accordance with the present invention;
FIG. 9 is a block diagram showing an outline of a moving image display of an embodiment 4 in accordance with the present invention;
FIG. 10 is a flowchart showing switching control processing of the moving image display of the embodiment 4 in accordance with the present invention;
FIG. 11 is a block diagram showing an outline of a moving image display of an embodiment 5 in accordance with the present invention; and
FIG. 12 is a flowchart showing switching control processing of the moving image display of the embodiment 5 in accordance with the present invention.

### BEST MODE FOR CARRYING OUT THE INVENTION

The best mode for carrying out the invention will now be described in detail with reference to the accompanying drawings.

### EMBODIMENT 1

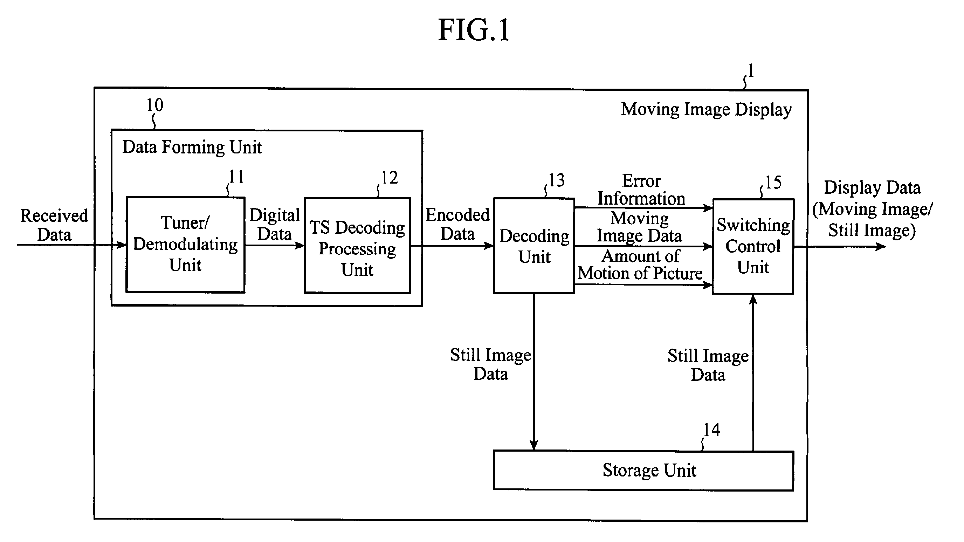

FIG. 1 is a block diagram showing an outline of a moving image display 1 of an embodiment 1 in accordance with the present invention. As shown in FIG. 1, the moving image display 1 comprises a data forming unit 10, decoding unit 13, storage unit 14 and switching control unit 15.

The data forming unit 10, which extracts encoded data from received data received with an antenna, comprises a tuner/demodulating unit 11 and TS (Transport Stream) decoding processing unit 12.

The tuner/demodulating unit 11 consists of a tuner and a demodulating unit. The tuner tunes to a broadcast wave a user desires among the received data received with the antenna and amplifies it. The demodulating unit demodulates the received data to which the tuner is tuned, and outputs digital data (TS).
The digital data output from the tuner/demodulating unit 11 is delivered to the TS decoding processing unit 12.

The TS decoding processing unit 12 decodes (deciphers) the digital data output from the tuner/demodulating unit 11 to extract encoded data (moving image).
The encoded data output from the TS decoding processing unit 12 is delivered to the decoding unit 13.

The decoding unit 13 decodes moving image data from the encoded data output from the TS decoding processing unit 12.
In addition, the decoding unit 13 detects, simultaneously with the decoding of the encoded data, as to whether errors occur in the decoded moving image data or not, and outputs as error information at the decoding. The errors detected from the moving image data are decoding errors such as a syntax error. The error information output from the decoding unit 13 contains information on whether errors occur or not and information on their positions when errors occur.
In addition, the decoding unit 13 detects, as visual characteristic information about a feature of a picture to be displayed, the amount of motion of the picture from the decoded frame and frames before and after that frame. The frames in front and behind are held by the decoding unit 13. The amount of motion of the picture is determined in accordance with a motion vector, correlation as an image with the frames in front and behind, and relationships in the amount of data with the frames in front and behind. The term "correlation as an image" refers to differences in hue and/or luminance constituting the individual frames. When the motion vector or the differences are large, the amount of motion is assumed to be large, and when the motion vector or differences are small, the amount of motion is assumed to be small. In addition, when the amount of data of the frame increases, the amount of motion is assumed to be large because the differences from the previous frame are large in this case. As for an I-frame that does not refer to the frames in front and behind such as in MPEG-2, since the frames in front and behind are not referred to, the amount of data in the I-frame increases. Accordingly, an increase in the amount of data in the I-frame is not taken into account.
The moving image data, the error information and the amount of motion of the picture output from the decoding unit 13 are delivered to the switching control unit 15.

Furthermore, when the number of errors of the decoded moving image data in a single frame is not greater than a threshold, the decoding unit 13 delivers the decoded moving image data to the storage unit 14 as still image data. Here, as the threshold to be compared with the number of errors in the decoded moving image data, the number of errors is set in advance which will not cause a viewer to become conscious of them even if they are in a still image data.

The storage unit 14 stores the moving image data decoded by the decoding unit 13 as the still image data. As for the still image data, when the number of errors in the moving image data decoded by the decoding unit 13 is not greater than a prescribed threshold, the moving image data is supplied to the storage unit 14 as the still image data to be stored in the storage unit 14. In addition, when the switching control unit 15 displays the still image data, the storage unit 14 supplies the still image data to the switching control unit 15.

According to the error information and the amount of motion of the picture output by the decoding unit 13, the switching control unit 15 outputs the moving image data decoded by the decoding unit 13 or the still image data stored in the storage unit 14 as display data. It counts the number of errors in the moving image data from the error information acquired from the decoding unit 13, and when the number of errors counted is not less than the prescribed threshold and when the amount of motion of the picture acquired from the decoding unit 13 is not greater than the prescribed threshold, it outputs the still image data stored in the storage unit 14 as the display data and switches to the still image.

Next, the switching control processing between the moving image and the still image by the switching control unit 15 of the moving image display 1 of the embodiment 1 in accordance with the present invention will be described.

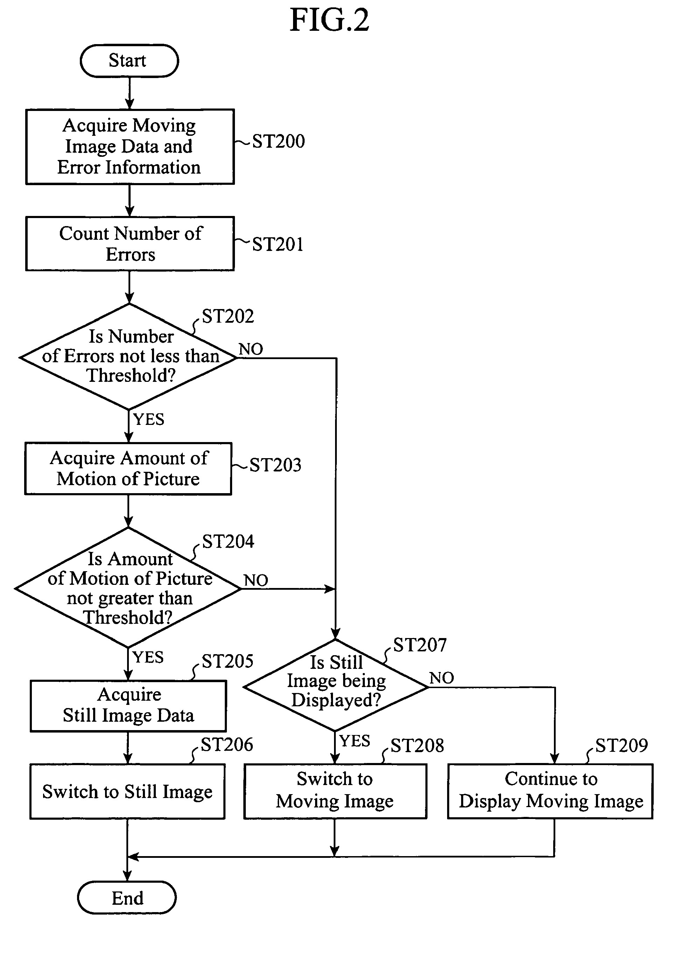

FIG. 2 is a flowchart showing the switching control processing of the moving image display 1 of the embodiment 1 in accordance with the present invention.

In the switching control processing, the switching control unit 15 acquires the moving image data and the error information (step ST200). More specifically, the switching control unit 15 acquires the moving image data output from the decoding unit 13 and the error information on whether the moving image data contains errors or not.

Subsequently, the switching control unit 15 counts the number of errors (step ST201). More specifically, the switching control unit 15 counts the number of errors in a single frame of the moving image data acquired from the decoding unit 13 according to the error information acquired from the decoding unit 13 at step ST200.

Subsequently, the switching control unit 15 decides as to whether the number of errors is not less than the threshold or not (step ST202). More specifically, the switching control unit 15 makes a decision as to whether the number of errors in the moving image data counted at step ST201 is not less than the threshold or not. Here, the preset threshold is set at the number of errors that will not cause a viewer to perceive them.

At this step ST202, if the switching control unit 15 decides that the number of errors in the moving image data is not less than the threshold, then it acquires the amount of motion of the picture (step ST203). More specifically, the switching control unit 15 acquires the amount of motion of the picture detected by the decoding unit 13.

Subsequently, the switching control unit 15 decides on whether the amount of motion of the picture is not greater than the threshold or not (step ST204). More specifically, the switching control unit 15 decides at step ST204 on whether the amount of motion of the picture acquired from the decoding unit 13 is not greater than the preset threshold.

At this step ST204, if the switching control unit 15 decides that the amount of motion of the picture is not greater than the threshold, then it acquires the still image data (step ST205). More specifically, the switching control unit 15 acquires the still image data from the storage unit 14 in order to output as the display data.

Subsequently, the switching control unit 15 carries out switching to the still image (step ST206). More specifically, the switching control unit 15 outputs the still image data acquired from the storage unit 14 at step ST205 as the display data. After that, the sequence is terminated.

On the other hand, if the switching control unit 15 decides at step ST202 that the number of errors in the moving image data is less than the threshold or if it decides at step ST204 that the amount of motion of the picture is greater than the threshold, then it makes a decision as to whether the still image is being displayed or not (step ST207). More specifically, the switching control unit 15 decides on whether the still image is being displayed on the display screen or not.

At this step ST207, if the switching control unit 15 decides that the still image is being displayed, then it carries out switching to the moving image (step ST208). More specifically, the switching control unit 15 executes the switching processing from the still image being displayed on the screen to the moving image. After that, the sequence is terminated.

On the other hand, if the switching control unit 15 decides that the still image is not displayed at step ST207, it continues to display the moving image (step ST209). More specifically, the switching control unit 15 continues to display the moving image which is being displayed on the display screen as it is. After that, the sequence is terminated.

As described above, according to the embodiment 1 in accordance with the present invention, it is configured in such a manner that when the switching control unit 15 makes a decision from the error information it receives from the decoding unit 13 that the moving image data includes errors, it receives the amount of motion of the picture from the decoding unit 13 as the visual characteristic information indicating the feature of the picture to be displayed, and decides whether to carry out switching to the still image or not depending on the amount of motion. Thus, it continues to display the moving image without switching to the still image when the amount of motion of the picture detected at the detection of the errors is greater than the threshold set because the viewer pays attention to the motion and will not perceive the distortion of the image even if it occurs somewhat in that case, and switches to the still image when the amount of motion of the picture is less than the threshold because the viewer looks at a particular video carefully and is likely to perceive the distortion of the picture in that case, thereby being able to hold down the viewer' s recognition of the distortion of the picture to a minimum by appropriately controlling the switching between the moving image and the still image in response to the amount of motion of the picture.

In addition, although the embodiment 1 in accordance with the present invention is configured in such a manner as to set in advance the threshold to be compared with the number of errors in the moving image data, a configuration is also possible which sets the threshold in accordance with the amount of motion of the picture, and which carries out switching to the still image when the errors are not less than the threshold, and displays the moving image when the number of errors is less than the threshold. In this case, the greater the amount of motion of the picture is, the greater the threshold is set, and the smaller the amount of motion of the picture is, the smaller the threshold is set. When setting the threshold in accordance with the amount of motion of the picture, the processing at step ST203 and step ST204 shown in FIG. 2 becomes unnecessary.

### EMBODIMENT 2

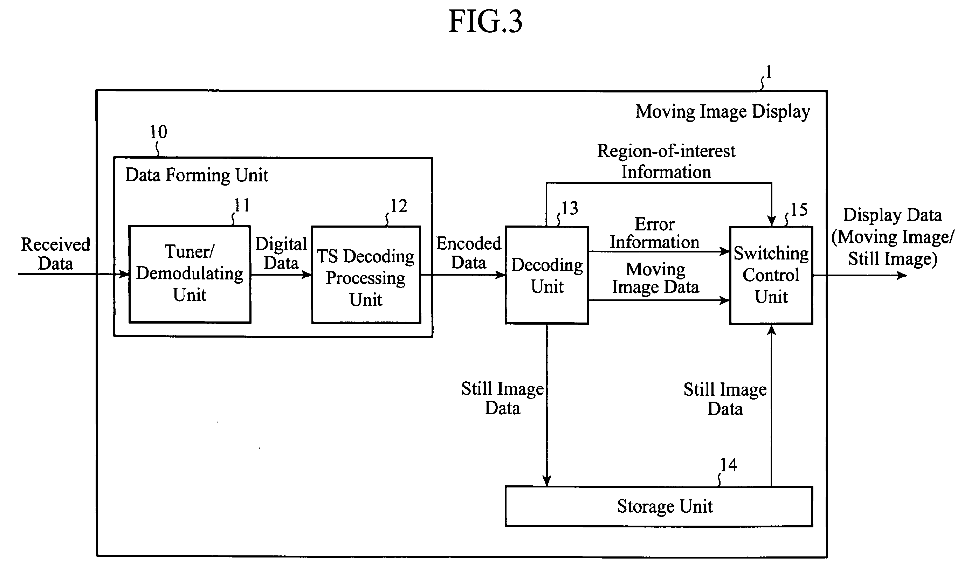

FIG. 3 is a block diagram showing an outline of the moving image display 1 of an embodiment 2 in accordance with the present invention. In FIG. 3, the same or like components to those of the embodiment 1 in accordance with the present invention shown in FIG. 1 are designated by the same reference numerals, and their description will be omitted.
The embodiment 2 in accordance with the present invention differs from the embodiment 1 in accordance with the present invention in that the decoding unit 13 does not supply the switching control unit 15 with the amount of motion of the picture, but with region-of-interest information about a picture as the visual characteristic information indicating a feature of a picture to be displayed. The embodiment will be described below centering on the difference from the embodiment 1 in accordance with the present invention.

In addition to the processing of decoding the encoded data and outputting the moving image data and the processing of detecting errors in the decoded moving image data and outputting the error information, which the decodingunit 13 of the embodiment 1 in accordance with the present invention executes, the decoding unit 13 extracts the region of interest by using the motion vector as the visual characteristic information indicating the feature of the picture to be displayed. Here, the term "region of interest" refers to an area to which a viewer pays attention when looking at a picture such as a moving portion of the picture or the face of a person talking. According to the decoded frame and the stored information on frames in front and behind, the decoding unit 13 obtains the motion vector of the moving image data, and extracts a set of all unit blocks with motion vectors not less than a particular value as the region of interest.
The moving image data, error information and region-of-interest information output by the decoding unit 13 are delivered to the switching control unit 15.
Furthermore, when the number of errors in the moving image data decoded is not greater than the prescribed threshold, the decoding unit 13 delivers the decoded moving image data to the storage unit 14 as the still image data.

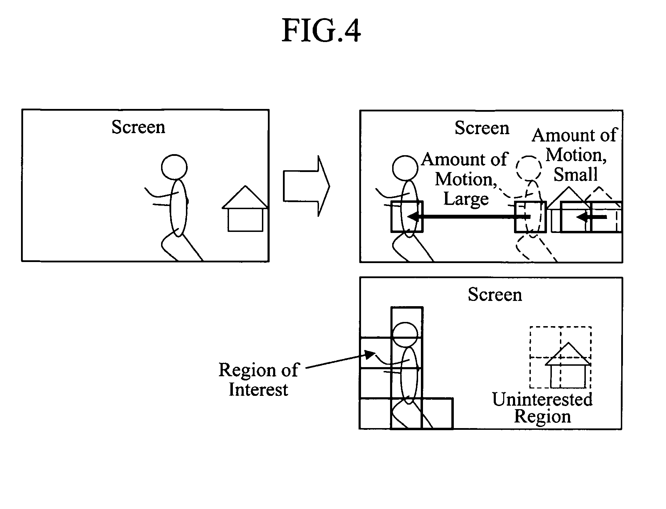

FIG. 4 is a diagram showing an example of the region of interest extracted by the moving image display 1 of the embodiment 2 in accordance with the present invention. As shown in FIG. 4, the decoding unit 13 is configured in such a manner as to obtain the motion vector of the moving image data from the decoded frame and the stored frames in front and behind, and to extract a portion with a little movement such as a building as an uninterested region, and a portion with large movement such as a moving person as the region of interest.

In addition, if it is possible to acquire, from the different types of encoded data within the same channel (H.264), the shape information or texture information about an object constituting the moving image data, a configuration is also possible which detects from the acquired information an area having a motion vector within the same object as the region of interest.

The switching control unit 15 acquires the region-of-interest information extracted by the decoding unit 13, and makes a decision as to whether errors occur in the region of interest of the moving image data or not by comparing the region-of-interestinformation with error positionsin the moving image data. If the number of errors in the region of interest of the moving image data is not less than threshold, it outputs the still image data stored in the storage unit 14 as the display data, and carries out switching to the still image.

Next, the switching control processing between the moving image and the still image by the switching control unit 15 of the moving image display 1 of the embodiment 2 in accordance with the present invention with the foregoing configuration will be described.

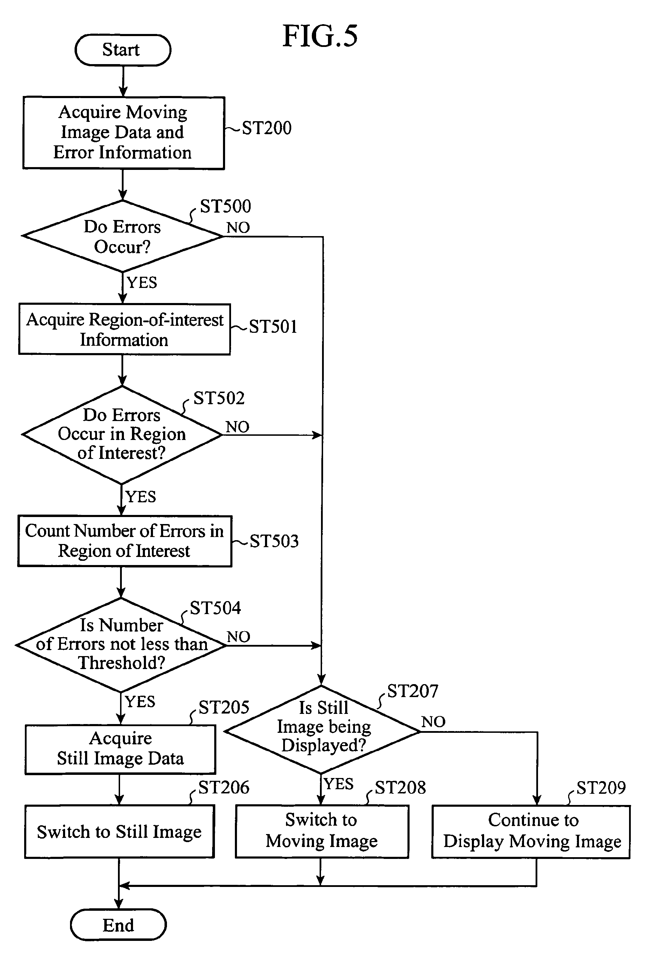

FIG. 5 is a flowchart showing the switching control processing of the moving image display 1 of the embodiment 2 in accordance with the present invention. In FIG. 5, the same or like steps to those in the flowchart of the embodiment 1 shown in FIG. 2 are designated by the same symbols and their description will be omitted.

In the switching control processing in the embodiment 2 in accordance with the present invention, the switching control unit 15 acquires the moving image data and error information from the decoding unit 13, first (step ST200). Subsequently, the switching control unit 15 makes a decision as to whether errors occur or not (step ST500). More specifically, the switching control unit 15 makes a decision as to whether the moving image data acquired contains errors or not from the error information acquired from the decoding unit 13 at step ST200.

At this step ST500, if the switching control unit 15 makes a decision that the acquired moving image data includes errors, then it acquires the region-of-interest information (step ST501). More specifically, the switching control unit 15 acquires the region-of-interest information on the moving image data which is extracted by the decoding unit 13 and to which the viewer pays attention.

Subsequently, the switching control unit 15 makes a decision as to whether errors occur in the region of interest (step ST502). More specifically, the switching control unit 15 makes a decision as to whether or not errors occurring in the moving image data acquired from the decoding unit 13 at step ST200 are located in the region of interest acquired from the decoding unit 13 at step ST501.

At this step ST502, if the switching control unit 15 makes a decision that the errors occur in the region of interest of the moving image data, then it counts the number of errors in the region of interest (step ST503). More specifically, the switching control unit 15 counts the number of errors in the region of interest within a single frame of the moving image data.

Subsequently, the switching control unit 15 makes a decision as to whether the number of errors is not less than the threshold or not (step ST504). More specifically, the switching control unit 15 makes a decision at step ST503 as to whether the number of errors counted in the region of interest of the moving image data is not less than the preset threshold or not. Here, the preset threshold is set at the number of errors that will not cause a viewer to perceive them.

At this step ST504, if the switching control unit 15 makes a decision that the number of errors in the region of interest of the moving image data is not less than threshold, then it acquires the still image data from the storage unit 14 (step ST205). Subsequently, the switching control unit 15 carries out switching to the still image (step ST206). After that, the sequence is terminated.

On the other hand, if the switching control unit 15 makes a decision that the moving image data does not include errors at step ST500, or that the region of interest of the moving image data does not include errors at step ST502, or that the number of errors in the region of interest of the moving image data is less than threshold at step ST504, then it makes a decision as to whether a still image is being displayed or not (step ST207).

At this step ST207, if the switching control unit 15 decides that the still image is being displayed, it carries out switching to the moving image (step ST208). After that, the sequence is terminated. On the other hand, if the switching control unit 15 decides that the still image is not being displayed at step ST207, it continues to display the moving image (step ST209). After that, the sequence is terminated.

As described above, according to the embodiment 2 in accordance with the present invention, it is configured in such a manner that the switching control unit 15 acquires the region-of-interest information about a picture from the decoding unit 13 as the visual characteristic information indicating the feature of the picture to be displayed, and carries out switching between the moving image and the still image in accordance with the errors in the region of interest, thereby making use of the human visual characteristics of paying attention to a moving portion. As for a talk show, for example, a talker's face is the region of interest, and if the errors occur in the region of interest, since the viewer pays close attention to the region of interest and is liable to perceive the picture distortion, the still image is displayed. In contrast, as for portions other than the region of interest such as a background, the viewer will not perceive the distortion of the image even if it occurs to some extent. Thus, the moving image continues to be displayed. Accordingly, it can hold down the viewer's recognition of the distortion of the image to a minimum by appropriately controlling the switching between the moving image and the still image in accordance with the errors in and outside the region of interest of the picture.

### EMBODIMENT 3

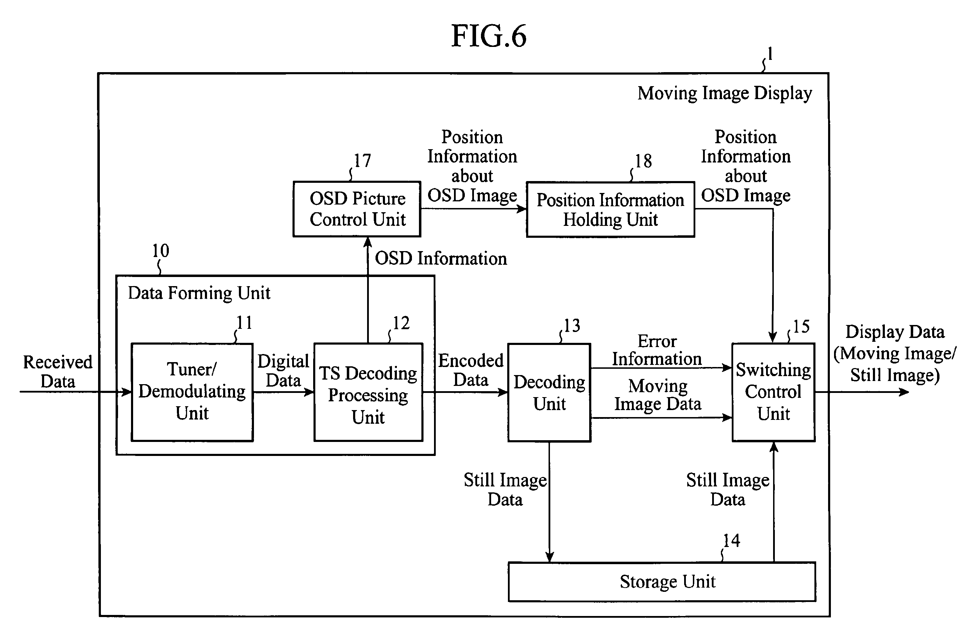

FIG. 6 is a block diagram showing an outline of the moving image display 1 of an embodiment 3 in accordance with the present invention. In FIG. 6, the same or like components to those of the embodiment 1 shown in FIG. 1 are designated by the same reference numerals, and their description will be omitted.
The embodiment 3 in accordance with the present invention differs from the embodiment 1 in accordance with the present invention in that the decoding unit 13 does not supply the switching control unit 15 with the amount of motion of the picture, that an OSDpicture control unit 17 for generating position information about an OSD image to be displayed on an OSD (On Screen Display) and a position information holding unit 18 of keeping the position information about the OSD image are added, and that the position information holding unit 18 supplies the switching control unit 15 with the position information about the OSD image as the visual characteristic information indicating the feature of the picture to be displayed. The following description will be made centering on the difference from the embodiment 1 in accordance with the present invention.

The OSD picture control unit 17 controls the display of an OSD image such as a clock, subtitles and channel information to be displayed on an OSD. As the information to be displayed on the OSD, there are data formed from the received data such as a clock and subtitles, and data the moving image display 1 retains in advance such as channel information. As for the data formed from the received data, it receives them from the TS decoding processing unit 12, and as for the data the moving image display 1 retains in advance, it receives them from the moving image display 1. From these data, it creates the position information about the OSD image to be displayed on the OSD.
The position information about the OSD image formed by the OSD picture control unit 17 is delivered to the position information holding unit 18.

The position information holding unit 18 retains the position information about the OSD image created by the OSDpicture control unit 17.
The position information about the OSD image to be displayed on the OSD, which is stored in the position information holding unit 18, is delivered to the switching control unit 15 as needed.

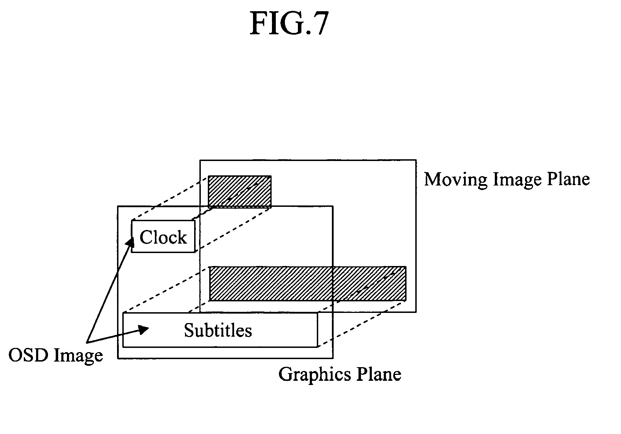

The switching control unit 15 acquires, as the visual characteristic information indicating the feature of the picture to be displayed, the position information about the OSD image to be displayed on the OSD, such as subtitles, a clock, channel display, and program titles; counts the number of errors at positions other than the display position of the OSD image from the position information about errors contained in the error information and from the position information about the OSD image; and if the number of errors counted is not less than a prescribed threshold, it outputs the still image data stored in the storage unit 14 as the display data and carries out switching to the still image. As shown in FIG. 7, the OSD image is displayed on a graphics plane different from a moving image plane that displays the moving image data, and the OSD image is superposed upon the moving image data to be displayed. Accordingly, even if errors occur under the OSD image, the OSD image conceals the error portions. In addition, even if the OSD image is semitransparent, since the viewer pays attention to the OSD image, the errors are hardly perceived. Thus, a configuration is made in such a manner that when the errors in the moving image data are under the OSD image, it displays the moving image, and when no errors are under the OSD image, it switches to the still image in accordance with the number of errors.

Next, the switching control processing between the moving image and the still image by the switching control unit 15 of the moving image display 1 of the embodiment 3 in accordance with the present invention with the foregoing configuration will be described.

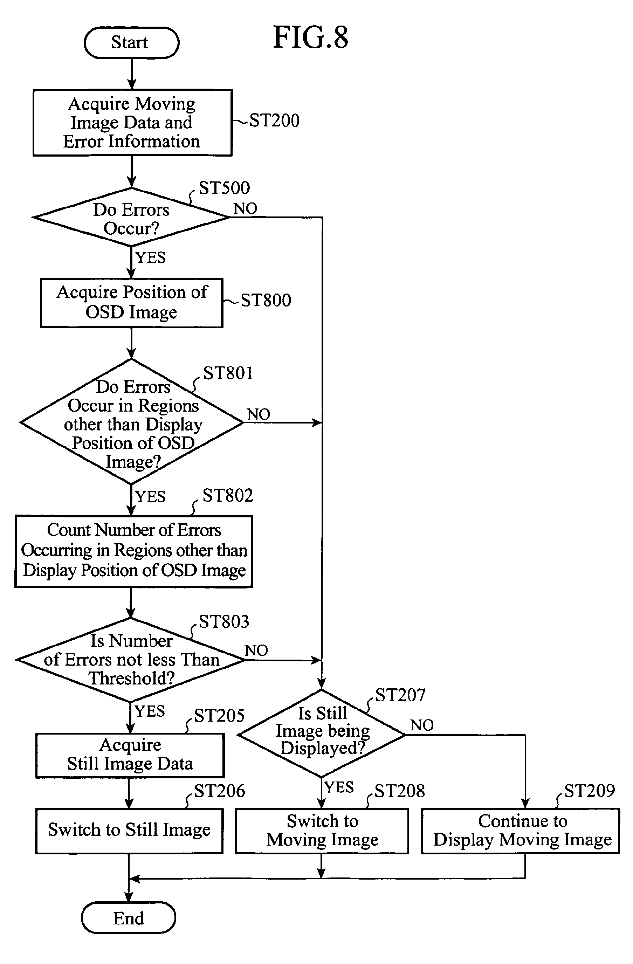

FIG. 8 is a flowchart showing the switching control processing of the moving image display 1 of the embodiment 3 in accordance with the present invention. In FIG. 8, the same steps as those in the flowcharts of the embodiments 1 and 2 shown in FIGs. 2 and 5 are designated by the same symbols and their description will be omitted.

In the switching control processing in the embodiment 3 in accordance with the present invention, the switching control unit 15 acquires the moving image data and the error information from the decoding unit 13 (step ST200), and makes a decision as to whether errors occur or not (step ST500).

At this step ST500, if the switching control unit 15 makes a decision that the errors occur in the moving image data acquired from the decoding unit 13, then it acquires the position information about the OSD image (step ST800). More specifically, the switching control unit 15 acquires the position information about the OSD image to be displayed on the OSD from the position information holding unit 18.

Subsequently, the switching control unit 15 make a decision as to whether errors occur at a position other than the display position of the OSD image (step ST801). More specifically, the switching control unit 15 makes a decision as to whether the errors in the moving image data acquired from the decoding unit 13 at step ST200 are at the positions other than the display position of the OSD image acquired from the position information holding unit 18 at step ST800.

At this step ST801, if the switching control unit 15 makes a decision that the errors occur at the positions other than the display position of the OSD image, then it counts the number of errors at the positions other than the display position of the OSD image (step ST802). More specifically, the switching control unit 15 counts the number of errors in a single frame at the positions other than the display position of the OSD image.

Subsequently, the switching control unit 15 makes a decision as to whether the number of errors is not less than threshold or not (step ST803). More specifically, the switching control unit 15 makes a decision as to whether the number of errors at the positions other than the display position of the OSD image counted at step ST802 is not less than the preset threshold or not. Here, the preset threshold is set at the number of errors that will not cause a viewer to perceive them.

At this step ST803, if the switching control unit 15 makes a decision that the number of errors at the positions other than the display position of the OSD image to be displayed on the OSD is not less than threshold, then it acquires the still image data from the storage unit 14 (step ST205), followed by switching to the still image (step ST206). After that, the sequence is terminated.

On the other hand, if the switching control unit 15 makes a decision that no errors occur in the moving image data at step ST500 or that no errors occur at the positions other than the display position of the OSD image at step ST801 or that the number of errors at the positions other than the display position of the OSD image is less than the threshold at step ST803, then it makes a decision as to whether the still image is being displayed or not (step ST207). At this step ST207, if the switching control unit 15 decides that the still image is being displayed, then it carries out switching to the moving image (step ST208). After that, the sequence is terminated. On the other hand, if the switching control unit 15 decides that the still image is not displayed at step ST207, it continues to display the moving image (step ST209). After that, the sequence is terminated.

As described above, according to the embodiment 3 in accordance with the present invention, it is configured in such a manner that the switching control unit 15 acquires, as the visual characteristic information indicating the feature of the picture to be displayed, the position information about the OSD image to be displayed on the OSD from the position information holding unit 18, and carries out the switching between the moving image and the still image in accordance with the errors occurring outside the range of the OSD image display. Accordingly, as for the errors occurring under the display positions of the OSD image on the OSD at the error detection, the OSD image conceals the error portions, thereby preventing the viewer from perceiving them. In addition, as for the semitransparent OSD image, since the viewer pays attention to the OSD image, the viewer can hardly perceive the errors, and the moving image is displayed as it is. Thus, appropriate switching between the moving image and the still image in accordance with the errors outside the range of the OSD image display can hold down the viewer's recognition of the distortion of the image to a minimum.

### EMBODIMENT 4

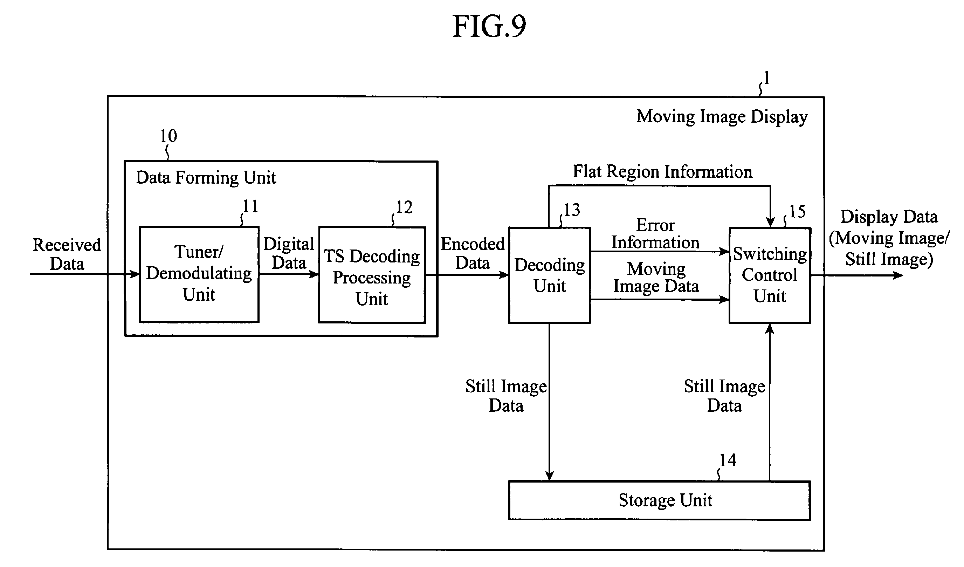

FIG. 9 is a block diagram showing an outline of the moving image display 1 of an embodiment 4 in accordance with the present invention. In FIG. 9, the same or like components to those of the embodiment 1 in accordance with the present invention shown in FIG. 1 are designated by the same reference numerals, and their description will be omitted.
The embodiment 4 in accordance with the present invention differs from the embodiment 1 in accordance with the present invention in that the decoding unit 13 does not supply the switching control unit 15 with the amount of motion of the picture, but with flat region information about the picture as the visual characteristic information indicating the feature of the picture to be displayed. The following description will be made centering on the difference from the embodiment 1 in accordance with the present invention.

In addition to the processing of decoding the encoded data and outputting the moving image data and the processing of detecting errors in the decoded moving image data and outputting the error information, which the decoding unit 13 of the embodiment 1 in accordance with the present invention executes, the decoding unit 13 extracts a flat region as the visual characteristic information indicating the feature of the picture to be displayed. Here, the term "flat region" refers to a region with little variations in color and brightness such as the sky and sea. The decoding unit 13 obtains spatial frequency for each prescribed region according to the decoded frame information, and extracts a set of all regions in which the obtained spatial frequency is not greater than a prescribed threshold as the flat region.
The moving image data, error information and flat region information output by the decoding unit 13 are delivered to the switching control unit 15.
In addition, when the number of errors in the decoded moving image data is not greater than the prescribed threshold, the decoding unit 13 delivers the decoded moving image data to the storage unit 14 as the still image data.

The switching control unit 15 acquires the flat region information extracted by the decoding unit 13, and makes a decision as to whether errors occur in the flat region of the moving image data or not by comparing the flat region information with the error positions in the moving image data. When the errors occur in the flat region of the moving image data, the switching control unit 15 obtains differences in luminance between the errors and their surroundings from the moving image data decoded by the decoding unit 13 in terms of the differences between the luminance at the error positions and the average values of the luminance in the surroundings adjacent to the errors, and counts the number of errors with the luminance differences not less than a prescribed threshold. When the number of errors counted is not less than the prescribed threshold, the switching control unit 15 outputs the still image data stored in the storage unit 14 as the display data, and carries out switching to the still image.

Alternatively, the switching control unit 15 can obtain, when errors occur in the flat region of the moving image data, the differences in hue between the errors and their surroundings in terms of the differences between the hue at the error positions and the average values of the hue in the surroundings adjacent to the errors, count the number of errors with the differences not less than the prescribed threshold in hue obtained, and make a decision of switching to the still image in accordance with the number of errors counted. Furthermore, a configuration is also possible which combines the luminance differences with the hue differences to decide the errors to be counted in the flat region.

Next, the switching control processing between the moving image and the still image by the switching control unit 15 of the moving image display 1 of the embodiment 4 in accordance with the present invention with the forgoing configuration will be described below.

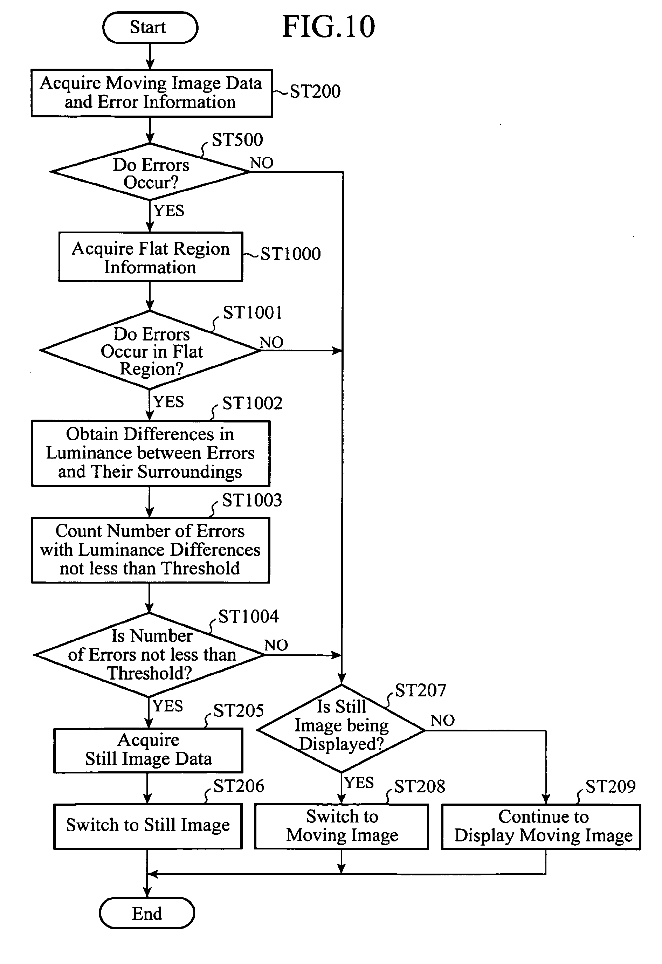

FIG. 10 is a flowchart showing the switching control processing of the moving image display 1 of the embodiment 4 in accordance with the present invention. In FIG. 10, the same or like steps to those in the flowcharts of the embodiments 1 and 2 shown in FIGs. 2 and 5 are designated by the same symbols and their description will be omitted.

In the switching control processing in the embodiment 4 in accordance with the present invention, the switching control unit 15 acquires the moving image data and error information from the decoding unit 13, first (step ST200), and makes a decision as to whether errors occur or not (step ST500).

At this step ST500, if the switching control unit 15 makes a decision that the errors occur in the moving image data acquired from the decoding unit 13, then it acquires the flat region information (step ST1000). More specifically, the switching control unit 15 acquires the flat region information indicating a region with little variations in color and brightness, which is extracted by the decoding unit 13.

Subsequently, the switching control unit 15 makes a decision as to whether errors occur in the flat region or not (step ST1001). More specifically, the switching control unit 15 makes a decision as to whether or not the errors occurring in the moving image data acquired from the decoding unit 13 at step ST200 are located in the flat region acquired from the decoding unit 13 at step ST1000.

At this step ST1001, if the switching control unit 15 makes a decision that the errors occur in the flat region of the moving image data, then it obtains the differences between the luminance of the errors and the luminance in the surroundings of the errors (step ST1002). More specifically, according to the moving image data acquired from the decoding unit 13, the switching control unit 15 obtains the luminance at the error positions and the average values of the luminance in the surroundings of the errors, and obtains the luminance differences.

Subsequently, the switching control unit 15 counts the number of errors with luminance differences not less than the threshold from the surroundings (step ST1003). More specifically, the switching control unit 15 counts the number of errors that occur in the flat region in a single frame of the moving image data and have the differences not less than the threshold in luminance from the surroundings.

Subsequently, the switching control unit 15 makes a decision as to whether the number of errors is not less than the threshold or not (step ST1004). More specifically, the switching control unit 15 makes a decision as to whether the number of errors counted at step ST1003, which occur in the flat region of the moving image data and have the differences not less than the threshold in the luminance from the surroundings, is not less than the preset threshold. Here, the preset threshold is set at the number of errors that will not cause a viewer to perceive them.

At this step ST1004, if the switching control unit 15 makes a decision that the number of errors, which occur in the flat region of the moving image data and have the differences not less than the threshold in luminance from the surroundings, is not less than threshold, then it acquires the still image data from the storage unit 14 (step ST205), followed by switching to the still image (step ST206). After that, the sequence is terminated.

On the other hand, if the switching control unit 15 makes a decision that no errors occur in the moving image data at step ST500, or that no errors occur in the flat region of the moving image data at step ST1001, or that the number of errors, which occur in the flat region of the moving image data and have the differences not less than the threshold in luminance from the surroundings, is less than threshold at step ST1004, then it makes a decision as to whether a still image is being displayed or not (step ST207). At this step ST207, if the switching control unit 15 decides that the still image is being displayed, then it carries out switching to the moving image (step ST208). After that, the sequence is terminated. On the other hand, unless the switching control unit 15 decides that the still image is being displayed at step ST207, it continues to display the moving image as it is (step ST209). After that, the sequence is terminated.

Incidentally, as a decisionmethod of the errors to be counted by the switching control unit 15, although a method of using the differences in luminance from the surroundings, it is not essential. For example, it is also possible to use differences in hue from the surroundings, or a combination of the luminance differences with the hue differences. Thus, at step ST1002 and step ST1003, the processing using the hue differences or the combination of the luminance differences with the hue differences instead of the luminance differences enables similar switching control processing.

As described above, according to the embodiment 4 in accordance with the present invention, it is configured in such a manner that the switching control unit 15 acquires the flat region information in the picture supplied from the decoding unit 13 as the visual characteristic information indicating the feature of the picture to be displayed, and carries out switching between the moving image and the still image in accordance with the errors that occur in the flat region and have differences not less than the threshold in luminance or hue from the surroundings. Accordingly, using the human visual characteristics in that the viewer is likely to perceive the distortion of the picture if the errors which differ greatly in color and brightness occur in the flat picture with little variances in color and brightness, the embodiment is configured in such a manner that when the errors with large differences in luminance or hue occur in the flat region, it displays a still image because the viewer is sensitive to the errors in this case, and that as for errors in an uneven region or errors with little differences in luminance or hue even in the flat region, since the viewer is insensitive to the differences from the surroundings and will hardly perceive the distortion of the picture, it continues to display the moving image. In this way, according to the errors which occur in the flat region of the picture and have differences not less than the threshold in luminance or hue from the surroundings, it controls the switching between the moving image and the still image, thereby being able to hold down the viewer's recognition of the distortion of the picture to a minimum.

### EMBODIMENT 5

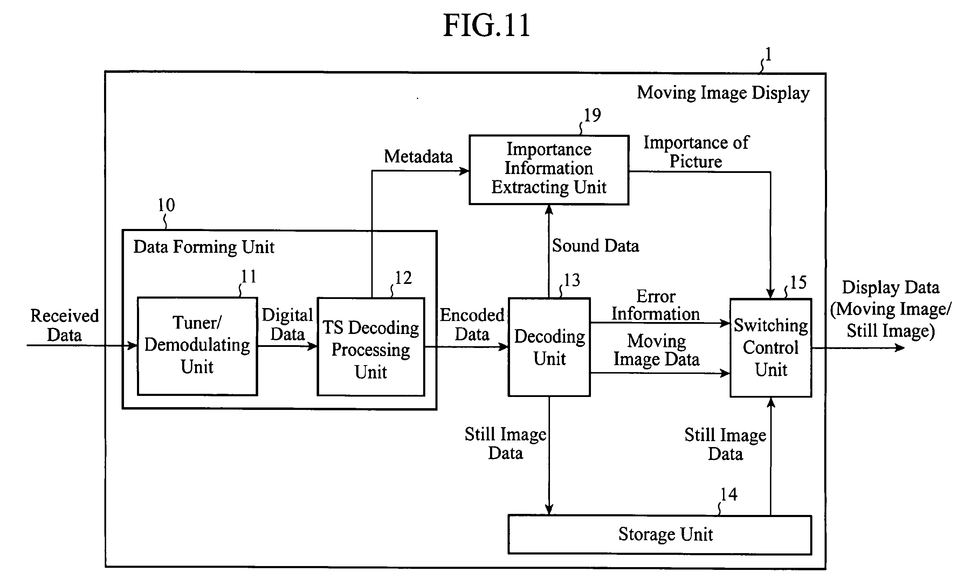

FIG. 11 is a block diagram showing an outline of the moving image display 1 of an embodiment 5 in accordance with the present invention. In FIG. 11, the same or like components to those of the embodiment 1 in accordance with the present invention shown in FIG. 1 are designated by the same reference numerals, and their description will be omitted.
The embodiment 5 in accordance with the present invention differs from the embodiment 1 in accordance with the present invention in that the decoding unit 13 does not supply the switching control unit 15 with the amount of motion of the picture, but that an importance information extracting unit 19 for extracting the degree of importance of a picture is added, and the importance information extracting unit 19 supplies the switching control unit 15 with the importance of the picture as the information indicating the feature of the picture to be displayed. The following description will be made centering on the difference from the embodiment 1 in accordance with the present invention.

In addition to the processing of the decoding unit 13 of decoding the encoded data and outputting the moving image data and of detecting errors of the decoded moving image data and outputting the error information in the embodiment 1 in accordance with the present invention, the decoding unit 13 decodes the encoded data and outputs sound data.
The moving image data and error information output by the decoding unit 13 are delivered to the switching control unit 15, and the sound data is delivered to the importance information extracting unit 19.

The importance information extracting unit 19 makes a decision as to whether the moving image data decoded by the decoding unit 13 relates to an important scene or not from the metadata output by the TS decoding processing unit 12 or from the sound data output by the decoding unit 13, and extracts the importance of the picture. Here, as an example of the important scene, there is the scene of a score of a sport. In such a case, a viewer pays attention to a video motion, and is considered to wish to continue watching the video motion in spite of distortion rather than watching a still image with little distortion. Accordingly, the importance of the picture is set at a high level. The importance extracted by the importance information extracting unit 19 is delivered to the switching control unit 15 as needed.

When using the sound data decoded by the decoding unit 13 to decide the importance of the picture in the importance information extracting unit 19, at the scene of a score which is an important scene of a sport, for example, there is a feature in that cheering of spectators breaks out. Thus, when detecting a feature such as cheering by analyzing the sound data, it decides that the picture is important and increases the importance of the picture. In addition, a drama or movie has a feature in that the volume of music increases in an important scene. It decides from the feature that the scene with the music is important, and increases the importance of the picture.
Alternatively, when the importance information extracting unit 19 acquires the metadata output from the TS decoding processing unit 12 and the metadata indicates the importance of the moving image data, it can also use it as the importance of the picture.
Furthermore, when it can acquire a plurality of data, the sound data and metadata, it can set the importance of the picture by combining them.

The switching control unit 15 acquires the importance of the picture extracted by the importance information extracting unit 19, and counts the number of errors in the moving image data according to the error information output from the decoding unit 13, and when the number of errors counted is not less than the prescribed threshold and the importance of the picture is not greater than the prescribed threshold, it outputs the still image data stored in the storage unit 14 as the display data, and carries out switching to the still image.

Next, the switching control processing between the moving image and the still image by the switching control unit 15 of the moving image display 1 in the embodiment 5 in accordance with the present invention with the foregoing configuration will be described below.

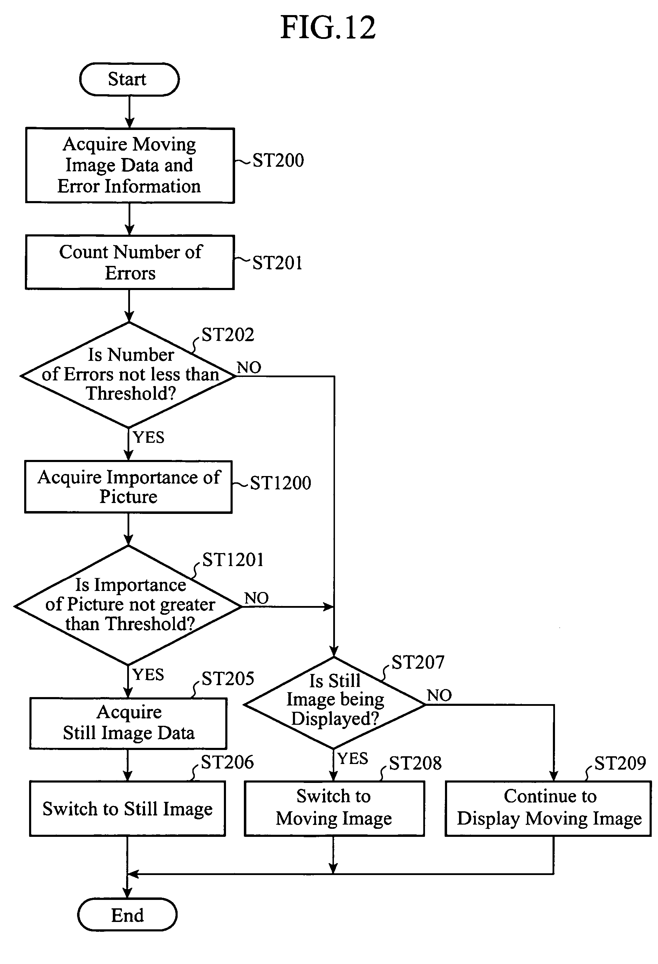

FIG. 12 is a flowchart showing the switching control processing of the moving image display 1 of the embodiment 5 in accordance with the present invention. In FIG. 12, the same or like steps to those of the flowchart of the embodiment 1 shown in FIG. 2 are designated by the same symbols, and their description will be omitted.

In the switching control processing in the embodiment 5 in accordance with the present invention, the switching control unit 15 acquires the moving image data and the error information from the decoding unit 13 (step ST200), and counts the number of errors (step ST201). Subsequently, the switching control unit 15 makes a decision as to whether the number of errors is not less than threshold or not (step ST202).

At this step ST202, if the switching control unit 15 makes a decision that the number of errors in the moving image data is not less than the threshold, then it acquires the importance of the picture (step ST1200). More specifically, the switching control unit 15 acquires the importance of the picture extracted by the importance information extracting unit 19.

Subsequently, the switching control unit 15 makes a decision as to whether the importance of the picture is not greater than the threshold or not (step ST1201). More specifically, the switching control unit 15 makes a decision as to whether the importance of the picture acquired from the importance information extracting unit 19 at step ST1200 is not greater than the preset threshold or not.

At this step ST1201, if the switching control unit 15 makes a decision that the importance of the picture is not greater than the threshold, it acquires the still image data from the storage unit 14 (step ST205), and then carries out switching to the still image (step ST206). After that, the sequence is terminated.

On the other hand, if the switching control unit 15 makes a decision that the errors in the moving image data is less than the threshold at step ST202 or that the importance of the picture is greater than the threshold at step ST1201, then it decides on whether a still image is being displayed or not (step ST207). At this step ST207, if the switching control unit 15 decides that the still image is being displayed, it carries out switching to the moving image (step ST208). After that, the sequence is terminated. On the other hand, if the switching control unit 15 decides at step ST207 that a still image is not being displayed, it continues to display the moving image (step ST209). After that, the sequence is terminated.

As described above, according to the embodiment 5 in accordance with the present invention, it is configured in such a manner that the switching control unit 15 receives, when deciding from the error information received from the decoding unit 13 that the moving image data includes errors, the importance of the picture from the importance information extracting unit 19 as the information indicating the feature of the picture to be displayed, and decides whether to carry out switching to the still image or not in accordance with the importance. Thus, when the importance of the picture detected is greater than the preset threshold at the error detection, since the viewer pays attention to the video motion and wishes to continue watching the motion, the viewer will not perceive the errors even if there is video distortion to some extent. Accordingly, the embodiment continues to display the moving image data rather than switching to the still image. In contrast, when the importance of the picture is not greater than the threshold, since the viewer does not pay much attention to the video motion, the viewer is likely to perceive the distortion of the picture. Accordingly, the embodiment switches to the still image. Thus, appropriate control of the switching between the moving image and the still image in accordance with the importance of the picture can hold down the viewer's recognition of the distortion of the image to a minimum.

In addition, although it is assumed in the embodiment 5 in accordance with the present invention that the threshold to be compared with the number of errors in the moving image data is preset, a configuration is also possible which sets the threshold in accordance with the importance of the picture, switches to a still image when errors are not less than the threshold set, and displays the moving image when the number of errors is not greater than the threshold. In this case, the higher the importance of the picture is, the greater the threshold is set, and the lower the importance of the picture is, the smaller the threshold is set. In addition, when setting the threshold in accordance with the importance of the picture, the processing at step ST1200 and step ST1201 shown in FIG. 12 becomes unnecessary.

### INDUSTRIAL APPLICABILITY

The moving image display in accordance with the present invention can hold down the viewer' s recognition of the distortion of an image to a minimumby appropriately controlling the switching between a moving image and a still image in accordance with the amount of motion or error positions of the picture. Accordingly, it is suitable for applications to moving image displays that carry out switching from a moving image to a still image when errors occur owing to deterioration in radio conditions.

## Claims

1. A moving image display comprising:
a data forming unit for extracting encoded data from received data;
a decoding unit for decoding moving image data from the encoded data extracted by the data forming unit, and for detecting not only error information at the decoding, but also visual characteristic information indicating a feature of a picture to be displayed;
a storage unit for storing the moving image data decoded by the decoding unit as still image data; and
a switching control unit for outputting, as display data, the moving image data decoded by the decoding unit or the still image data stored in the storage unit in accordance with the error information and visual characteristic information detected by the decoding unit.

2. The moving image display according to claim 1, wherein
the decoding unit detects, as the visual characteristic information, an amount of motion of a picture from the moving image data and from its previous and following moving image data; and
the switching control unit counts the number of errors from the error information, and outputs, when the number of errors counted is not less than a prescribed threshold and the amount of motion of the picture is not greater than a prescribed threshold, the still image data stored in the storage unit as the display data.

3. The moving image display according to claim 1, wherein
the decoding unit extracts, as the visual characteristic information, a region of interest from the moving image data and from its previous and following moving image data; and
the switching control unit counts the number of errors occurring in the region of interest from position information about errors contained in the error information, and outputs, when the number of errors counted is not less than a prescribed threshold, the still image data stored in the storage unit as the display data.

4. A moving image display comprising:
a data forming unit for extracting encoded data from received data;
a decoding unit for decoding moving image data from the encoded data extracted by the data forming unit, and for detecting error information at the decoding;
a storage unit for storing the moving image data decoded by the decoding unit as still image data;
an OSD picture control unit for forming position information about an OSD image to be displayed on an OSD;
a position information holding unit for retaining the position information about the OSD image formed by the OSD picture control unit; and
a switching control unit for outputting, as display data, the moving image data decoded by the decoding unit or the still image data stored in the storage unit in accordance with the error information detected by the decoding unit and the position information about the OSD image retained in the position information holding unit.

5. The moving image display according to claim 4, wherein
the switching control unit counts the number of errors occurring at positions other than a display position of the OSD image from the position information about errors contained in the error information and the position information about the OSD image, and outputs, when the number of errors counted is not less than a prescribed threshold, the still image data stored in the storage unit as the display data.

6. The moving image display according to claim 1, wherein
the decoding unit extracts, as the visual characteristic information, a flat region from the moving image data; and
the switching control unit counts the number of errors which occur in the flat region and have differences not less than a threshold in luminance from their surroundings from the position information about errors contained in the error information, and outputs, when the number of errors counted is not less than a prescribed threshold, the still image data retained in the storage unit as the display data.

7. The moving image display according to claim 1, wherein
the decoding unit extracts, as the visual characteristic information, a flat region from the moving image data; and
the switching control unit counts the number of errors which occur in the flat region and have differences not less than a threshold in hue from their surroundings from the position information about errors contained in the error information, and outputs, when the number of errors counted is not less than a prescribed threshold, the still image data retained in the storage unit as the display data.

8. A moving image display comprising:
a data forming unit for extracting encoded data from received data;
a decoding unit for decoding moving image data from the encoded data extracted by the data forming unit, and for detecting error information at the decoding;
a storage unit for storing the moving image data decoded by the decoding unit as still image data;
an importance information extracting unit for extracting importance of a picture of the moving image data decoded by the decoding unit; and
a switching control unit for outputting, as display data, the moving image data decoded by the decoding unit or the still image data stored in the storage unit in accordance with the error information detected by the decoding unit and the importance of the picture extracted by the importance information extracting unit.

9. The moving image display according to claim 8, wherein
the decoding unit decodes sound data from the encoded data;
the importance information extracting unit extracts the importance of the picture from the sound data decoded by the decoding unit; and
the switching control unit counts the number of errors from the error information, and outputs, when the number of errors counted is not less than a prescribed threshold and the importance of the picture is not greater than a prescribed threshold, the still image data stored in the storage unit as the display data.

10. The moving image display according to claim 8, wherein
the data forming unit extracts metadata from the received data;
the importance information extracting unit extracts the importance of the picture from the metadata extracted by the data forming unit; and
the switching control unit counts the number of errors from the error information, and outputs, when the number of errors counted is not less than a prescribed threshold and the importance of the picture is not greater than a prescribed threshold, the still image data stored in the storage unit as the display data.
